# EUROPÄISCHE PATENTSCHRIFT

(11) **EP 3 174 935 B1**
(45) Veröffentlichungstag und Bekanntmachung des Hinweises auf die Patenterteilung: **21.06.2023**
(21) Anmeldenummer: 15745463.8
(22) Anmeldetag: 31.07.2015
(51) Int. Cl.: C08L 69/00

(54) **COPOLYCARBONAT-ZUSAMMENSETZUNGEN MIT CYCLISCHEN UND LINEAREN OLIGOMEREN UND VERBESSERTEN OPTISCHEN EIGENSCHAFTEN**
COPOLYCARBONATE COMPOUNDS WITH CYCLIC AND LINEAR OLIGOMERS AND IMPROVED OPTICAL PROPERTIES
COMPOSITIONS DE COPOLYCARBONATE DOTÉES D'OLIGOMÈRES CYCLIQUES ET LINÉAIRES ET DE PROPRIÉTÉS OPTIQUES AMÉLIORÉES

(30) Priorität: 01.08.2014 EP 14179572
(43) Veröffentlichungstag der Anmeldung: 07.06.2017
(73) Patentinhaber: Covestro Intellectual Property GmbH & Co. KG, 51373 Leverkusen (DE)
(72) Erfinder: WEHRMANN, Rolf, 47800 Krefeld (DE); HEUER, Helmut, Werner, 51371 Leverkusen (DE); BOUMANS, Anke, 47574 Goch (DE)
(74) Vertreter: Levpat
(86) Internationale Anmeldenummer: PCT/EP2015/067648
(87) Internationale Veröffentlichungsnummer: WO 2016/016424

(56) Entgegenhaltungen:
- EP-A2- 0 953 605
- WO-A1-2013/045552
- P. Kilz ET AL: "Two-Dimensional Chromatography for the Deformulation of Complex Copolymers : Hyphenated and Multidimensional Techniques" In: "ADVANCES IN CHEMISTRY SERIES.", 5 May 1995 (1995-05-05), AMERICAN CHEMICAL SOCIETY, WASHINGTON, DC., US, XP055435047, ISSN: 0065-2393 vol. 247, pages 223-241, DOI: 10.1021/ba-1995-0247.ch017,

## Beschreibung

Gegenstand dieser Erfindung sind Copolycarbonat-Zusammensetzungen mit cyclischen und linearen Oligomeren, die verbesserte optische Eigenschaften aufweisen, deren Verwendung zur Herstellung von Blends und Formteilen und daraus erhältliche Formteile.

Copolycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen besondere thermische und mechanische Eigenschaften gefordert sind, beispielsweise Föhne, Anwendungen im Automobilbereich, Kunststoffabdeckungen, Streuscheiben oder Lichtleitelemente sowie Lampenabdeckungen oder Lampeneinfassungen (bezels). Diese Copolycarbonate können als Blendpartner für weitere thermoplastische Kunststoffe verwendet werden.

Bei diesen Zusammensetzungen werden praktisch immer gute thermische und mechanische Eigenschaften wie eine hohe Vicat-Temperatur (Wärmeformbeständigkeit) und Glastemperatur zwingend benötigt.

Neben den guten thermischen und mechanischen Eigenschaften von Polycarbonaten, stellen die hohe Transparenz und die geringe Eigenfarbe (Yellowness Index, YI) eine weitere Kerneigenschaft von Polycarbonaten dar. Diese guten optischen Eigenschaften müssen auch über einen längeren Zeitraum erhalten bleiben. Dies gilt besonders für das Thermoalterungsverhalten von Bauteilen. D. h. das Langzeitverhalten unter thermischer Belastung von (Co-)Polycarbonaten ist ein entscheidendes Qualitätskriterium, welches für den Einsatz von (Co-)Polycarbonatzusammensetzungen für technische Bauteile von größter Bedeutung ist. Ist dies nicht gegeben, unterliegt die (Co)Polycarbonatzusammensetzung und damit das Bauteil einer stärkeren thermischen Vergilbung, welche unerwünscht ist.

Aus WO 2013/045552 sind Zusammensetzungen enthaltend ein Copolycarbonat basierend auf Bisphenol A und 1,1-Bis-(4-hydroxyphenyl)-3,3,5-trimethylcyclohexan (Bisphenol TMC) bekannt.

EP 0 953 605 beschreibt lineare Polycarbonatzusammensetzungen mit verbessertem Fließverhalten, dadurch gekennzeichnet dass, cyclische Oligocarbonate in großen Mengen, z. B. 0,5 % bis 4 % zugesetzt werden und mittels eines Doppelwellenextruders in der Matrix eines linearen BPA-Polycarbonates bei 285 °C homogenisiert werden. Dabei nimmt die Fließfähigkeit mit steigender Menge an cyclischen Oligocarbonaten zu. Über die thermische Stabilität entsprechender Polycarbonate sagt diese Anmeldung jedoch nichts aus.

EP 2 411 473 beschreibt den Einsatz von Imidstrukturen- enthaltenden Polyacrylaten zur Verbesserung der Transmission.

WO 2009/056421 beschreibt den Einsatz von Polyethern, die ebenfalls eine Verbesserung bewirken können. Allerdings weisen Polyether eine zu geringe eigene Thermostabilität für den Einsatz als Blendpartner in Hochtemperatur-Polycarbonaten auf.

Es bestand daher die Aufgabe, Zusammensetzungen enthaltend aromatische Polycarbonate zu finden, die bei praktisch gleich bleibender Wärmeformbeständigkeit verbesserte optische Eigenschaften, insbesondere eine geringe Vergilbung nach Thermolagerung, aufweisen.

Im Stand der Technik findet der Fachmann allerdings keinen Hinweis darauf, wie er bei einer vorgegebenen / definierten Wärmeformbeständigkeit die optischen Eigenschaften von (Co)Polycarbonatzusammensetzungen bzw.von PC Blends, die in einem Compoundierschritt hergestellt werden, verbessert werden können. Insbesondere gibt es keinen Hinweis bezüglich des Einflusses der Blendkomponente, speziell des Einflusses von in bestimmten Mengen vorliegenden speziellen Oligomerstrukturen in mindestens einem auf die Fließfähigkeit der Gesamtmischung.

Überraschenderweise wurde gefunden, dass Zusammensetzungen aus speziellen (Hoch-Tg) Copolycarbonaten (Komponente A; T_{g}: Glasübergangstemperatur) mit einem weiteren (Co)polycarbonat (Komponente B) immer dann verbesserte optische Eigenschaften aufweisen, wenn spezielle Oligomerstrukturen in Komponente B oder in beiden Komponenten enthalten sind.

Dies gilt überraschenderweise für Mischungen in einem sehr großen Mischungsverhältnis der Blendpartner.

Die beschriebenen neuen Eigenschaftskombinationen stellen ein wichtiges Kriterium für die mechanische und thermische Performance des spritzgegossenen bzw. extrudierten Bauteils dar. Aus den erfindungsgemäßen Copolycarbonat-Zusammensetzungen hergestellte Spritzgussteile oder Extrudate weisen signifikant verbesserte Fließeigenschaften auf, ohne dass die thermischen Eigenschaften sich verschlechtern.

Unter Copolycarbonat-Zusammensetzungen bzw. Blends im Sinne dieser Anmeldung versteht man Mischungen aus wenigstens einem Copolycarbonaten und wenigstens einem weiteren Copolycarbonat oder Polycarbonat, die gegebenenfalls mit Zusatzstoffen (Komponente C) versehen sein können.

Gegenstand der vorliegenden Erfindung sind daher Copolycarbonat-Zusammensetzungen umfassend als Komponente
A) 5 bis 99 Gew.-% eines Copolycarbonats enthaltend eine oder mehrere Monomereinheiten der Formel (1) 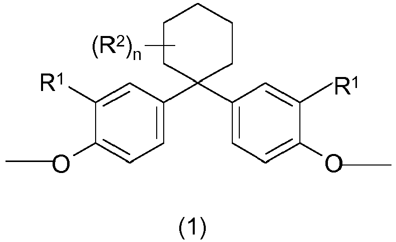 in der
   R¹ für Wasserstoff oder C₁-C₄-Alkyl, bevorzugt für Wasserstoff steht,
   R² für C₁-C₄-Alkyl, bevorzugt Methyl steht,
   n für 0, 1, 2 oder 3, bevorzugt 3 stehen;
   als Komponente
B) 95 bis 1 Gew.-% eines (Co)polycarbonats enthaltend eine oder mehrere Monomereinheiten der allgemeinen Formel (2): 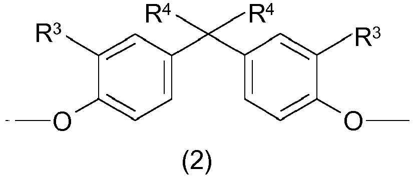
   in der R³ für H, lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für H oder C₁-Alkyl (Methyl) steht;
      und
   in der R⁴ für lineare oder verzweigte C₁-C₁₀ Alkyl, bevorzugt lineare oder verzweigte C₁-C₆ Alkyl, besonders bevorzugt für lineare oder verzweigte C₁-C₄ Alkyl, ganz besonders bevorzugt für C₁-Alkyl (Methyl) steht,

   und wobei das (Co)polycarbonat der Komponente B) keine Monomereinheiten der Formel (1) aufweist und die Summe der Gew.-% der Komponenten A und B in der Zusammensetzung 100 Gew.-% ergibt;
   dadurch gekennzeichnet, dass die Komponente B wenigstens ein cyclisches Oligomer der allgemeinen Formel (I) in einer Gesamtmenge von mindestens 1,05 bis 1,60 Gew.-%, bezogen auf das Gewicht der Komponente B, enthält, 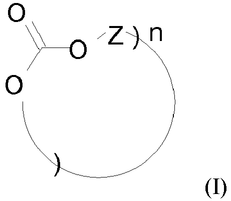 wobei
      n eine ganze Zahl von 2 bis 6 ist und
      Z für einen Rest der Formel (Ia) 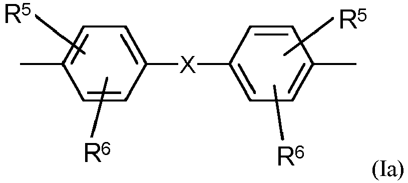 steht, in der
      R⁵ und R⁶ unabhängig voneinander für H, C₁-C₈-Alkyl, bevorzugt für H oder C₁ - C₄-Alkyl, besonders bevorzugt für Wasserstoff oder Methyl stehen, und
      X für eine Einfachbindung, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, vorzugsweise für eine Einfachbindung oder Isopropyliden, steht;
   und die Komponente B ein oder mehrere linearen Oligomere der allgemeinen Formeln (II), (III), (IV), (V) und/oder (VI) in einer Gesamtmenge von 0,50 Gew.-% bis 1,40 Gew.-%, bezogen auf das Gewicht der Komponente B, enthält, 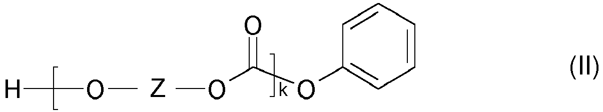 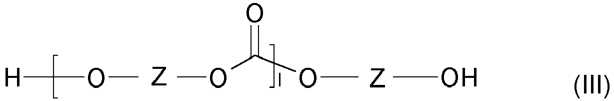 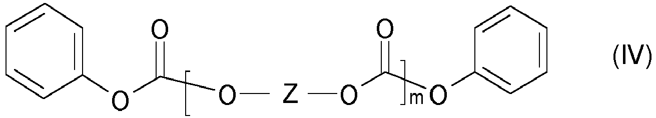 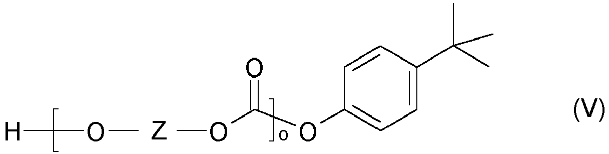 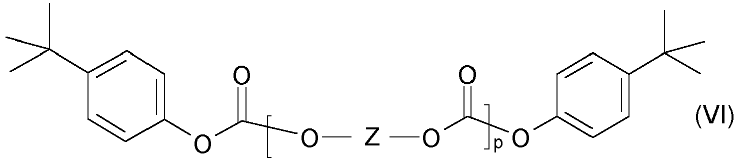 wobei k, l, m, o und p jeweils unabhängig voneinander für eine ganze Zahl zwischen 1 und 6 stehen und Z für den bereits definierten Rest der Formel (Ia) steht,
   wobei die Mengen der Strukturen (I) und (II) bis (VI) durch Lösen der Komponente B) in Methylenchlorid, Fällung mit Aceton, Einengung des Filtrats zur Trockne, Lösen des Trockenrückstands in Tetrahydrofuran und anschließende quantitative HPLC mit UV-Detektion bestimmt werden können.

### Definitionen

**C₁-C₄-Alkyl** steht im Rahmen der Erfindung beispielsweise für Methyl, Ethyl, n-Propyl, isoPropyl, n-Butyl, sec.-Butyl, tert.-Butyl, **C₁-C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₀-Alkyl** darüber hinaus beispielsweise für n-Heptyl und n-Octyl, Pinakyl, Adamantyl, die isomeren Menthyle, n-Nonyl, n-Decyl, **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

**Aryl** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

### Oligomere

Die Mengen der linearen Oligomere und der cyclischen Oligomere lassen sich wie folgt ermitteln: eine Probe der Polycarbonat-Zusammensetzung wird in Methylenchlorid gelöst. Durch Zugabe von Aceton wird der überwiegende Anteil des Polymeren ausgefällt. Die ungelösten Anteile werden abfiltriert, das Filtrat wird zur Trockne eingeengt. Der Trockenrückstand wird mit THF gelöst und die Oligomeren werden mit HPLC (High Pressure Liquid Chromatography) mit UV-Detektion bestimmt.

Die cyclischen Oligomere der allgemeinen Formel (I) sind in einer Gesamtmenge von 1,05 Gew.-% bis 1,60 Gew.-%, bevorzugt 1,10 Gew.-% bis 1,50 Gew.-% in der Komponente B (jeweils bezogen auf das Gesamtgewicht der Komponente B und bestimmt durch Fällung und anschließende quantitative HPLC wie oben beschrieben) enthalten.

Bevorzugt treten Ringgrößen mit n = 3 und/oder n = 4, besonders bevorzugt n = 4 am häufigsten auf.

Die Gesamtmenge an linearen Oligomeren der allgemeinen Formeln (II), (III), (IV), (V) und (VI) in der Komponente B beträgt 0,50 Gew.-% bis 1,40 Gew.-%, vorzugsweise 0,60 Gew.-% bis 1,35 Gew.-%, und besonders bevorzugt 0,60 Gew.-% bis 1,30 Gew.-% (jeweils bezogen auf das Gesamtgewicht der Komponente B und bestimmt durch Fällung und anschließende quantitative HPLC).

Vorzugsweise beträgt die Gesamtmenge der cyclischen Oligomere der allgemeinen Formel (I) und der linearen Oligomeren der allgemeinen Formeln (II), (III), (IV), (V) und (VI) in der Komponente B in Summe mindestens 2,0 Gew.-%, vorzugsweise mindestens 2,2 Gew.-%, und besonders bevorzugt mindestens 2,4 Gew.-% (jeweils bezogen auf das Gesamtgewicht der Komponente B und bestimmt durch Fällung und anschließende quantitative HPLC).

Die Komponente A kann ebenfalls ein oder mehrere cyclische Oligomere der allgemeinen Formel (I) aufweisen.

Die Komponente A kann auch eine oder mehrere lineare Oligomere der allgemeinen Formeln (II), (III), (IV), (V) und (VI) enthalten.

### Komponente A

Die erfindungsgemäße Copolycarbonat-Zusammensetzung enthält 5 bis 99 Gew.-%, vorzugsweise 10 bis 95 Gew.-%, und besonders bevorzugt 15 bis 90 Gew.-% (bezogen auf die Summe der Gewichtsteile der Komponenten A und B) an Komponente A.

Die Monomereinheit(en) der allgemeinen Formel (1) führt man über ein oder mehrere entsprechenden Diphenole der allgemeinen Formel (1a) ein: 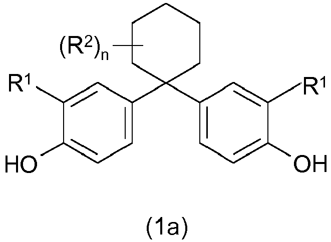 in der
R¹ für Wasserstoff oder C₁-C₄-Alkyl, bevorzugt Wasserstoff,
R² für C₁-C₄-Alkyl, bevorzugt Methyl, und
n für 0, 1, 2 oder 3, bevorzugt 3 stehen.

Die erfindungsgemäß einzusetzenden Diphenole der Formeln (1a) und ihr Einsatz in Homopolycarbonaten sind in der Literatur teilweise bekannt (DE 3918406).

Besonders bevorzugt ist 1,1-Bis-(4-hydroxyphenyl)-3,3,5-trimethylcyclohexan (Bisphenol TMC) mit der Formel (1b):

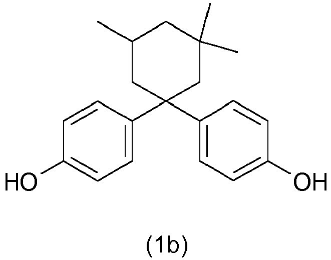

Neben ein oder mehreren Monomereinheiten der Formeln (1), können in der Komponente A ein oder mehrere Monomereinheit(en) der Formel (4) enthalten sein: 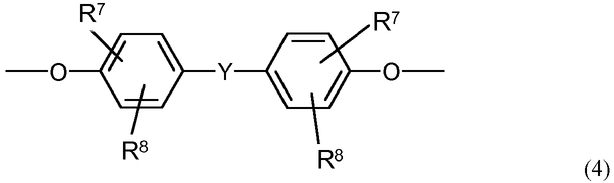 in der
R⁷ und R⁸ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

Die Monomereinheit(en) der allgemeinen Formel (4) führt man über ein oder mehrere entsprechenden Diphenole der allgemeinen Formel (4a) ein: 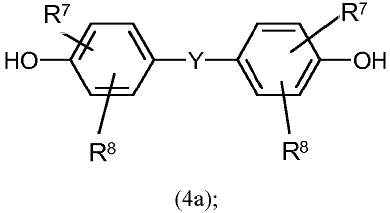 wobei R⁷, R⁸ und Y jeweils die bereits im Zusammenhang mit der Formel (4) erwähnte Bedeutung haben.

Beispielhaft werden für die Diphenole der Formel (4a), die neben den Diphenolen der Formel (1a) eingesetzt werden können, Hydrochinon, Resorcin, Dihydroxybiphenyle, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen und auch α,ω-Bis-(hydroxyphenyl)-polysiloxane genannt.

Bevorzugte Diphenole der Formel (4a) sind beispielsweise 4,4`-Dihydroxybiphenyl (DOD), 4,4`-Dihydroxybiphenylether (DOD-Ether), 2,2-Bis-(4-hydroxyphenyl)-propan (Bisphenol A), 2,4-Bis-(4-hydroxyphenyl)-2-methylbutan, 1,1-Bis-(4-hydroxyphenyl)-1-phenylethan, 1,1-Bis[2-(4-hydroxyphenyl)-2-propyl]-benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4`-Dihydroxybiphenyl (DOD), 4,4'-Dihydroxybiphenylether (DOD-Ether), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan und 2,2-Bis-(3,5-dibrom-4-hydroxyphenyl)-propan.

Ganz besonders bevorzugt sind Verbindungen der allgemeinen Formel (4b), 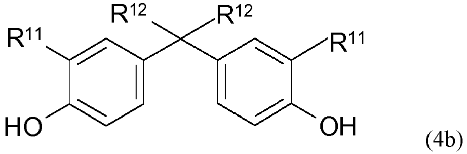
in denen R¹¹ für H, lineare oder verzweigte C₁-C₁₀ -Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in denen R¹² für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (4c) ganz besonders bevorzugt.

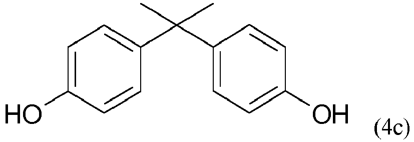

Die Diphenole der allgemeinen Formeln (4a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Anteil der Monomereinheiten der Formel (1) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Die bevorzugten Diphenolateinheiten der Copolycarbonate gemäß Komponente A leiten sich von Monomeren mit den allgemeinen Strukturen der oben beschriebenen Formeln (1a) und (4a) ab, besonders bevorzugt ist die Kombination aus den Bisphenolen (1b) und (4c).

Die Copolycarbonatkomponente der Copolycarbonat-Zusammensetzungen kann als block- und statistisches Copolycarbonat vorliegen. Besonders bevorzugt sind statistische Copolycarbonate.

Dabei ergibt sich das Verhältnis der Häufigkeit der Diphenolat-Monomereinheiten im Copolycarbonat aus dem Molverhältnis der eingesetzten Diphenole.

### Komponente B

Die erfindungsgemäße Copolycarbonat-Zusammensetzung enthält 95 bis 1 Gew.-%, vorzugsweise 90 bis 5 Gew.-%, und besonders bevorzugt 85 bis 10 Gew.-% (bezogen auf die Summe der Gewichtsteile der Komponenten A, B und C) an Komponente B.

Komponente B ist ein Polycarbonat oder ein Copolycarbonat. (Co)Polycarbonate im Sinne der vorliegenden Erfindung sind sowohl Homopolycarbonate als auch Copolycarbonate,

Die Monomereinheit(en) der allgemeinen Formel (2) führt man über ein oder mehrere entsprechenden Diphenole der allgemeinen Formel (2a) ein: 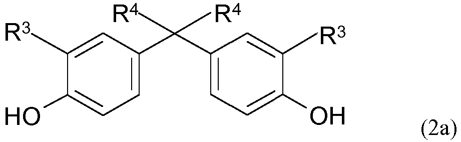
in denen R³ für H, lineare oder verzweigte C₁-C₁₀-Alkyl, bevorzugt lineare oder verzweigte C₁-C₆ - Alkyl, besonders bevorzugt für lineare oder verzweigte C₁-C₄-Alkyl, ganz besonders bevorzugt für H oder C₁-Alkyl (Methyl) steht und
in denen R⁴ für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (4c) ganz besonders bevorzugt.

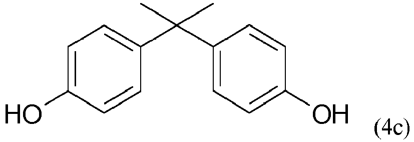

Neben ein oder mehreren Monomereinheiten der allgemeinen Formeln (2), können ein oder mehrere Monomereinheit der Formel (4) enthalten sein, wie sie bereits für Komponente A beschrieben sind.

Besonders bevorzugt basiert Komponente B ausschließlich auf dem Bisphenol (4c).

Die erfindungsgemäßen Copolycarbonat-Zusammensetzungen weisen bei speziellen Verhältnissen der Komponenten A und B bei einer hohen Wärmeformbeständigkeit trotz einer höheren Schmelzviskosität verbesserte optische Eigenschaften (geringere Vergilbung) der so erhaltenen Copolycarbonat-Zusammensetzungen auf.

Dies gilt insbesondere für Zusammensetzungen, in denen die Komponente B in einer Konzentration von größer oder gleich 50 Gew.-% vorliegt und die Komponente B einen Alkylgruppen-haltigen Kettenabbrecher, vorzugsweise der Formel (3b), enthält.

### Herstellungsverfahren

Bevorzugte Herstellungsweisen der (Co)Polycarbonate, die in der erfindungsgemäßen Zusammensetzung als Komponente A und B bevorzugt eingesetzt werden, einschließlich der (Co)Polyestercarbonate, sind das Phasengrenzflächenverfahren und das Schmelzeumesterungsverfahren, wobei vorzugsweise wenigstens eine der Komponenten A und B nach dem Phasengrenzflächenverfahren hergestellt wird.

In einer bevorzugten Ausführungsform erfolgt zumindest die Herstellung der Komponente A, vorzugsweise der Komponenten A und B, nach dem Phasengrenzflächenverfahren.

Zur Gewinnung hochmolekularer (Co)Polycarbonate nach dem Phasengrenzflächenverfahren werden im Zweiphasengemisch die Alkalisalze von Diphenolen mit Phosgen umgesetzt. Das Molekulargewicht kann durch die Menge an Monophenolen, die als Kettenabbrecher wirken, wie z. B. Phenol, tert.-Butylphenol oder Cumylphenol gesteuert werden, besonders bevorzugt Phenol, tert.-Butylphenol. Bei diesen Umsetzungen entstehen praktisch ausschließlich lineare Polymere. Dies kann durch Endgruppenanalyse nachgewiesen werden. Durch gezielte Verwendung von sogenannten Verzweigern, in der Regel mehrfach hydroxylierte Verbindungen, werden dabei auch verzweigte Polycarbonate erhalten.

Als Verzweiger können geringe Mengen, vorzugsweise Mengen zwischen 0,05 und 5 Mol-%, besonders bevorzugt 0,1-3 Mol-%, ganz besonders bevorzugt 0,1-2 Mol-%, bezogen auf die Mole eingesetzter Diphenole, an trifunktionellen Verbindungen wie z.B. Isatinbiskresol (IBK) oder Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan (THPE); Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropyl-benzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere; 1,1,1-Tri-(4-hydroxyphenyl)-ethan (THPE) und Bis-(3-methyl-4-hydroxyphenyl)-2-oxo-2,3-dihydroindol eingesetzt werden. Bevorzugt werden Isatinbiskresol sowie 1,1,1-Tri-(4-hydroxyphenyl)-ethan (THPE) und Bis-(3-methyl-4-hydroxyphenyl)-2-oxo-2,3-dihydroindol als Verzweiger eingesetzt.

Durch den Einsatz dieser Verzweiger ergeben sich verzweigte Strukturen. Die resultierende Langkettenverzweigung führt meist zu rheologischen Eigenschaften der erhaltenen Polycarbonate, die sich in einer Strukturviskosität im Vergleich zu linearen Typen äußert.

Die Menge an einzusetzendem Kettenabbrecher beträgt vorzugsweise 0,5 Mol-% bis 10 Mol-%, bevorzugt 1 Mol-% bis 8 Mol-%, besonders bevorzugt 2 Mol-% bis 6 Mol-% bezogen auf Mole an jeweils eingesetzten Diphenolen. Die Zugabe der Kettenabbrecher kann vor, während oder nach der Phosgenierung erfolgen, bevorzugt als Lösung in einem Lösungsmittelgemisch aus Methylenchlorid und Chlorbenzol (8-15 Gew.-%-ig).

Zur Gewinnung hochmolekularer (Co)Polycarbonate nach dem Schmelzumesterungsverfahren werden Diphenole mit Kohlensäurediestern, meist Diphenylcarbonat, in Anwesenheit von Katalysatoren, wie Alkalisalzen, Ammonium- oder Phosphoniumverbindungen, in der Schmelze umgesetzt.

Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden Diphenole der Formeln (2a) und gegebenenfalls (1a) mit Kohlensäurediestern unter Zuhilfenahme von geeigneten Katalysatoren und gegebenenfalls weiteren Zusatzstoffen in der Schmelze umgeestert.

Kohlensäurediester im Sinne der Erfindung sind solche der Formeln (5) und (6) 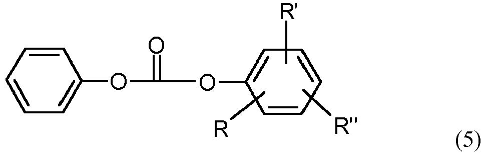 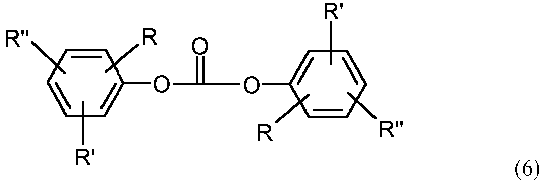 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise
Diphenylcarbonat, Butylphenyl-phenylcarbonat, Di-Butylphenylcarbonat, Isobutylphenylphenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenylphenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)-carbonat Tritylphenyl-phenylcarbonat, Di-Tritylphenylcarbonat,
bevorzugt Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureestern beträgt 100 bis 130 mol-%, bevorzugt 103 bis 120 mol-%, besonders bevorzugt 103 bis 109 mol-%, bezogen auf die ein oder mehreren Diphenole.

Als Katalysatoren werden im Schmelzumesterungsverfahren, wie in der genannten Literatur beschrieben, basische Katalysatoren wie beispielsweise Alkali- und Erdalkalihydroxide und - oxide, aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der folgenden allgemeinen Formel (7) 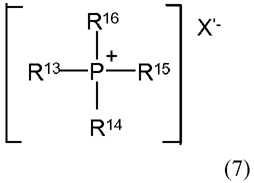 wobei
- R¹³⁻¹⁶: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X'⁻: ein Anion wie Hydroxid, Sulfat, Hydrogensulfat, Hydrogencarbonat, Carbonat, ein Halogenid, bevorzugt Chlorid, oder ein Alkoholat der Formel OR¹⁷ sein kann, wobei R¹⁷ C₆-C₁₄-Aryl oder C₇-C₁₂-Aralkyl, bevorzugt Phenyl, sein kann.

Bevorzugte Katalysatoren sind Tetraphenylphosphoniumchlorid, Tetraphenylphosphoniumhydroxid, Tetraphenylphosphoniumphenolat, besonders bevorzugt Tetraphenylphosphoniumphenolat.

Die Katalysatoren werden bevorzugt in Mengen von 10⁻⁸ bis 10⁻³ mol, bezogen auf ein mol Diphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Diphenol, Kohlensäurediester oder Monohydroxyarylverbindungen. Besonders bevorzugt sind Monohydroxyarylverbindungen, weil dem Fachmann geläufig ist, dass sich die Diphenole und Kohlensäurediester bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Das Verfahren zur Herstellung der in der erfindungsgemäßen Zusammensetzung enthaltenen (Co)Polycarbonate nach dem Umesterungsverfahren kann diskontinuierlich oder auch kontinuierlich gestaltet werden. Nachdem die Diphenole der Formeln (2a) und gegebenenfalls (1a) und Kohlensäurediester, ggf. mit weiteren Verbindungen, als Schmelze vorliegen, wird in Gegenwart des Katalysators die Umsetzung gestartet. Der Umsatz bzw. das Molekulargewicht wird bei steigenden Temperaturen und fallenden Drücken in geeigneten Apparaten und Vorrichtungen durch Abführen der sich abspaltenden Monohydroxyarylverbindung solange erhöht, bis der angestrebte Endzustand erreicht ist. Durch Wahl des Verhältnisses Diphenol zu Kohlensäurediester und der durch Wahl der Verfahrensweise bzw. Anlage zur Herstellung des Polycarbonats gegebenen Verlustrate des Kohlensäurediesters über die Brüden und ggf. zugesetzter Verbindungen, wie beispielsweise einer höhersiedenden Monohydroxyarylverbindung, werden die Endgruppen in Art und Konzentration geprägt.

Bezüglich der Art und Weise, in welcher Anlage und nach welcher Verfahrensweise der Prozess ausgeführt wird, gibt es keine Limitierung und Einschränkung.

Weiter gibt es keine spezielle Limitierung und Einschränkung bezüglich der Temperaturen, der Drücke und verwendeter Katalysatoren, um die Schmelzeumesterungsreaktion zwischen dem Diphenol und dem Kohlensäurediester, ggf. auch anderer zugesetzter Reaktanten durchzuführen. Jede Bedingung ist möglich, solange die gewählten Temperaturen, Drucke und Katalysatoren eine Schmelzeumesterung unter entsprechend schneller Entfernung der abgespaltenen Monohydroxyarylverbindung ermöglichen.

Die Temperaturen über den gesamten Prozess betragen im Allgemeinen 180 bis 330°C bei Drücken von 15 bar, absolut bis 0,01 mbar, absolut.

Meist wird eine kontinuierliche Verfahrensweise gewählt, weil das vorteilhaft für die Produktqualität ist.

Vorzugsweise ist das kontinuierliche Verfahren zur Herstellung von Polycarbonaten dadurch gekennzeichnet, dass ein oder mehrere Diphenole mit dem Kohlensäurediester, ggf. auch anderer zugesetzter Reaktanten unter Verwendung der Katalysatoren, nach einer Vorkondensation ohne Abtrennen der gebildeten Monohydroxyarylverbindung in sich dann daran anschließenden mehreren Reaktions-Verdampfer-Stufen bei schrittweise steigenden Temperaturen und schrittweise fallenden Drucken das Molekulargewicht bis zum gewünschten Niveau aufgebaut wird.

Die für die einzelnen Reaktions-Verdampfer-Stufen geeigneten Vorrichtungen, Apparate und Reaktoren sind entsprechend dem Verfahrensverlauf Wärmetauscher, Entspannungsapparate, Abscheider, Kolonnen, Verdampfer, Rührbehälter und Reaktoren oder sonstige käufliche Apparate, welche die nötige Verweilzeit bei ausgewählten Temperaturen und Drucken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

Alle Vorrichtungen sind über Pumpen, Rohrleitungen und Ventilen miteinander verbunden. Die Rohrleitungen zwischen allen Einrichtungen sollten selbstverständlich so kurz wie möglich sein und die Krümmungen der Leitungen so gering wie möglich gehalten werden, um unnötig verlängerte Verweilzeiten zu vermeiden. Dabei sind die äußeren, das heißt technischen Rahmenbedingungen und Belange für Montagen chemischer Anlagen zu berücksichtigen.

Zur Durchführung des Verfahrens nach einer bevorzugten kontinuierlichen Verfahrensweise können die Reaktionspartner entweder gemeinsam aufgeschmolzen oder aber das feste Diphenol in der Kohlensäurediesterschmelze oder der feste Kohlensäurediester in der Schmelze des Diphenols gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze des Diphenols, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Danach wird der Katalysator, vorzugsweise in Phenol gelöst, zugemischt und die Schmelze auf die Reaktionstemperatur erhitzt. Diese beträgt zu Beginn des technisch bedeutsamen Prozesses zur Herstellung von Polycarbonat aus 2,2-Bis-(4-hydroxyphenyl)-propan und Diphenylcarbonat 180 bis 220°C, vorzugsweise 190 bis 210°C, ganz besonders bevorzugt 190°C. Bei Verweilzeiten von 15 bis 90 min, vorzugsweise 30 bis 60 min, wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 15 bar absolut.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird die entstandene Hydroxyarylverbindung mit noch vorhandenen Monomeren verdampft.

Die Zahl dieser Stufen, hier beispielhaft 4, kann zwischen 2 und 6 variieren. Die Temperaturen und Drucke sind bei Änderung der Stufigkeit entsprechend anzupassen, um vergleichbare Resultate zu erhalten. Die in diesen Stufen erreichte rel. Viskosität des oligomeren Carbonats liegt zwischen 1,04 und 1,20, bevorzugt zwischen 1,05 und 1,15, besonders bevorzugt zwischen 1,06 bis 1,10.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Scheiben- oder Korbreaktor gefördert und bei 250 bis 310°C, bevorzugt 250 bis 290°C, besonders bevorzugt 250 bis 280°C, bei Drucken von 1 bis 15 mbar, vorzugsweise 2 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,28, bevorzugt 1,13 bis 1,26, besonders bevorzugt 1,13 bis 1,24.

Die diesen Reaktor verlassende Schmelze wird in einem weiteren Scheiben- oder Korbreaktor auf die gewünschte Endviskosität bzw. das Endmolekulargewicht gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren bzw. Scheibenreaktoren kann auch in einem Korbreaktor bzw. Scheibenreaktor zusammengefasst werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäss Deutscher Patentanmeldung Nr. 10 100 404 erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung eines Diphenols oder eines Kohlensäurediesters verwendet werden.

Die Scheiben- oder Korbreaktoren zeichnen sich dadurch aus, dass sie bei hohen Verweilzeiten eine sehr große, sich ständig erneuernde Oberfläche am Vakuum bereitstellen. Die Scheiben- oder Korbreaktoren sind entsprechend den Schmelzviskositäten der Produkte geometrisch ausgebildet. Geeignet sind beispielsweise Reaktoren, wie sie in der DE 44 47 422 C2 und EP A 1 253 163, oder Zweiwellenreaktoren, wie sie in der WO A 99/28 370 beschrieben sind.

Die Oligocarbonate, auch sehr niedermolekulare, und die fertigen Polycarbonate werden in der Regel mittels Zahnradpumpen, Schnecken unterschiedlichster Bauart oder Verdrängerpumpen spezieller Bauart gefördert.

Analog zum Phasengrenzflächenverfahren können mehrfunktionelle Verbindungen als Verzweiger eingesetzt werden.

Die relative Lösungsviskosität der in der erfindungsgemäßen Zusammensetzung enthaltenen Poly- oder Copolycarbonate, bestimmt nach DIN 51562, liegt bevorzugt im Bereich von = 1,15 - 1,35.

Die mittleren Gewichtsmolekulargewichte in der erfindungsgemäßen Zusammensetzung enthaltenen Poly- oder Copolycarbonate betragen vorzugsweise 15.000 bis 40.000 g/mol, besonders bevorzugt 17.000 bis 36.000 g/mol, und ganz besonders bevorzugt 17.000 bis 34.000 g/mol, und werden durch GPC gegen eine Polycarbonat-Eichung bestimmt.

Besonders bevorzugt sind Copolycarbonat-Zusammensetzungen, in denen Komponente A und/oder die Komponente B wenigstens zum Teil als Endgruppe eine Struktureinheit der Formel (3a) und/oder eine Struktureinheit der Formel (3b) enthalten

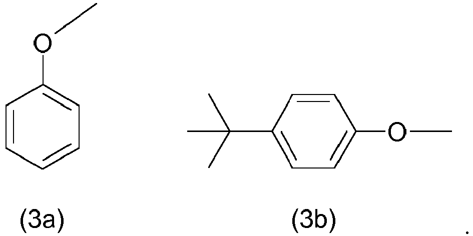

### Komponente C

Gegenstand der vorliegenden Erfindung sind weiterhin Zusammensetzungen enthaltend die Komponenten A und B und optional als Komponente C mindestens ein Zusatzstoff, vorzugsweise ausgewählt aus der Gruppe der für diese Thermoplasten üblichen Zusatzstoffe wie Füllstoffe, Ruß, UV-Stabilisatoren, IR-Stabilisatoren, Thermostabilisatoren, Antistatika und Pigmente, Farbmittel in den üblichen Mengen; gegebenenfalls können das Entformungsverhalten, das Fließverhalten, und/oder die Flammwidrigkeit noch durch Zusatz externer Entformungsmittel, Fließmittel, und/oder Flammschutzmittel wie Sulfonsäuresalze, PTFE-Polymere bzw. PTFE-Copolymere, bromierte Oligocarbonate, oder Oligophosphate sowie Phosphazene verbessert werden (z. B. Alkyl- und Arylphosphite, -phosphate, -phosphane, -niedermolekulare Carbonsäureester, Halogenverbindungen, Salze, Kreide, Talk, Silikate, Bornitrid, thermisch oder elektrisch leitfähige Ruße oder Graphite, Quarz-/Quarzmehl, Glas- und Kohlenstofffasern, Pigmente oder auch Additive zur Reduktion des linearen thermischen Ausdehnungskoeffizienten (CLTE) und deren Kombination. Solche Verbindungen werden z. B. in WO 99/55772, S. 15 - 25, und in "Plastics Additives", R. Gächter und H. Müller, Hanser Publishers 1983, beschrieben).

Die Zusammensetzung enthält im Allgemeinen an organischen Zusatzstoffen 0 bis 5,0 Gew.-%, bevorzugt 0,005 bis 2,50 Gew.-%, besonders bevorzugt 0,005 bis 1,60 Gew.-%, ganz besonders bevorzugt 0,005 bis 1,50 Gew.-%, insbesondere ganz besonders bevorzugt 0,005 bis 1,0 Gew.-% (bezogen auf die Gesamtzusammensetzung) Zusatzstoffe.

Falls anorganische Zusatzstoffe in der Zusammensetzung enthalten sind, kann die Gesamtmenge an organischen und anorganischen Zusatzstoffen bis zu 30 Gew.-% (bezogen auf die Gesamtzusammensetzung) betragen.

Die den erfindungsgemäßen Zusammensetzungen gegebenenfalls zugesetzten Entformungsmitttel sind bevorzugt ausgewählt aus der Gruppe bestehend aus Pentaerythrittetrastearat, Glycerinmonostearat und langkettigen Fettsäureestern, wie beispielsweise Stearylstearat und Propandiolstearat, sowie deren Mischungen. Die Entformungsmittel werden vorzugsweise eingesetzt in Mengen von 0,05 Gew.-% bis 2,00 Gew.-%, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,20 Gew.-% bis 0,50 Gew.-%, bezogen auf das Gesamtgewicht der Komponenten A, B und C.

Geeignete Zusatzstoffe sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyclohexyl-4-hydroxyphenyl)-propionsäure, Ester von 3,5-Di-tert-butyl-4-hydroxyphenylessigsäure, Amide von β-(3,5-Di-tert-butyl-4-hydroxyphenyl)-propionsäure, geeignete Thiosynergisten, sekundäre Antioxidantien, Phosphite und Phosphonite, Benzofuranone und Indolinone.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Triisoctylphosphat (TOF), Octadecyl-3-(3,5-di-tert butyl-4-hydroxyphenyl)propionat (Irganox 1076), Bis(2,4-dicumylphenyl)pentaerythritoldiphosphit (Doverphos S-9228), Bis(2,6-di-tert.butyl-4-methylphenyl)-pentaerythritoldiphosphit (ADK STAB PEP-36) und Triphenylphosphin (TPP). Sie werden allein oder im Gemisch (z. B. Irganox B900 oder Doverphos S-9228 mit Irganox B900 bzw. Irganox 1076 oder Triphenylphosphin (TPP) mit Triisoctylphosphat (TOF)) eingesetzt. Thermostabilisatoren werden vorzugsweise eingesetzt in Mengen von 0,005 Gew.-% bis 2,00 Gew.-%, bevorzugt in Mengen von 0,01 Gew.-% bis 1,0 Gew.-%, besonders bevorzugt in Mengen von 0,015 Gew.-% bis 0,60 Gew.-% und ganz besonders bevorzugt in Mengen von 0,02 Gew.-% bis 0,50 Gew.-%, bezogen auf das Gesamtgewicht der Komponenten A, B und C.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)-benzotriazole, 2-Hydroxybenzophenone, Ester von substituierten und unsubstituierten Benzoesäuren, Acrylate, Sterisch gehinderte Amine, Oxamide sowie 2-(Hydroxyphenyl)-1,3,5-triazine bzw. substituierte Hydroxyalkoxyphenyl, 1,3,5-triazole, bevorzugt sind substituierte Benzotriazole wie z.B. 2-(2'-hydroxy-5'-methyl-phenyl)-benzotriazol, 2-(2'-hydroxy-3',5'-di-t-butyl-phenyl)-benzotriazol, 2-(2'-hydroxy-3'-tert.-butyl-5'-methyl-phenyl)-5-chlorobenzotriazol, 2-(2'-hydroxy-3',5'-tert.-butylphenyl)-5-chlorobenzotriazol, 2-(2'-hydroxy-5'-tert.-octylphenyl)-benzotriazol, 2-(2'-hydroxy-3',5'-di-tert.-amylphenyl)-benzotriazol, 2-[2'-hydroxy-3'-(3",4",5",6"-tetrahydrophthalimido-ethyl)-5'-methylphenyl]-benzotriazol and 2,2'-methylenbis [4-(1,1,3,3-tetramethylbutyl)-6-(2H-benzotriazol-2-yl)-phenol].

Als UV-Stabilisatoren sind weiterhin geeignet ausgewählt aus der Gruppe, die Benzotriazole (z. B. Tinuvine der Fa. BASF), Triazin Tinuvin 1600 der Fa. BASF), Benzophenone (Uvinule der Fa. BASF), Cyanacrylate (Uvinule der Fa. BASF), Zimtsäureester und Oxalanilide sowie Mischungen dieser UV-Stabilisatoren umfasst.

Die UV-Stabilisatoren werden eingesetzt in Mengen von 0,01 Gew.-% bis 2,0 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Zusatzstoffe sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, Ruß, IR-Absorber, einzeln, im Gemisch oder auch in Kombination mit Stabilisatoren, Glasfasern, Glas(hohl)kugeln, anorganischen Füllstoffen wie beispielsweise Titandioxid oder Bariumsulfat zugesetzt werden.

In einer besonders bevorzugten Ausführungsform enthält die erfindungsgemäße Zusammensetzung wenigstens ein Additiv ausgewählt aus der Gruppe bestehend aus den Thermostabilisatoren, den Entformungsmitteln und den UV-Absorbern, vorzugsweise in einer Gesamtmenge von 0,2 Gew.% bis 2,0 Gew.%, bezogen auf die Gesamtmenge der Komponenten A, B und C. Besonders bevorzugt sind Thermostabilisatoren.

Die erfindungsgemäßen Copolycarbonat-Zusammensetzungen werden auf üblichen Maschinen wie beispielsweise Mehrwellenextruder durch Compoundierung gegebenenfalls unter Zugabe von Additiven und anderen Zuschlagstoffen bei Temperaturen zwischen 280°C und 360°C hergestellt.

Die erfindungsgemäßen (Co-)Polycarbonate und Copolycarbonat-Zusammensetzungen können auf üblichen Maschinen, beispielsweise auf Extrudern oder Spritzgussmaschinen, zu beliebigen Formkörpern, bzw. Formteile zu Folien oder Platten oder Flaschen, in üblicher Weise verarbeitet werden.

Die erfindungsgemäßen Copolycarbonat-Zusammensetzungen, gegebenenfalls in Abmischung mit anderen Thermoplasten und/oder üblichen Zusatzstoffen, können zu beliebigen Formkörpern/Extrudaten verarbeitet überall dort eingesetzt werden, wo bereits bekannte Polycarbonate, Polyestercarbonate und Polyester eingesetzt werden:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien und Folienlaminaten.
3. Automobilscheinwerfer, bezels, Blinker, Reflektoren
4. Als transluzente Kunststoffe mit einem Gehalt an Glasfasern für lichttechnische Zwecke Als transluzente Kunststoffe mit einem Gehalt an Bariumsulfat, Titandioxid und oder Zirkoniumoxid bzw. hoch-reflektierende opake Zusammensetzungen (high reflectance) und daraus hergestellte Bauteile.
5. Zur Herstellung von Präzisionsspritzgußteilen, wie beispielsweise Linsen, Kollimatoren, Linsenhalterungen, Lichtleitelementen und LED-Anwendungen.
6. Als Elektroisolierstoffe für elektrische Leiter und für Steckergehäuse sowie Steckverbinder
7. Gehäuse für elektrische Geräte
8. Schutzbrillen, Visiere
9. Für medizinische Anwendungen, Medical Devices, z.B. Oxygenatoren, Dialysatoren (Hohlfaserdialysatoren), 3-Wege-Hähne, Schlauchverbinder, Blutfilter, Injektionssysteme, Inhalatoren, Ampullen
10. Extrudierte Formkörper wie Platten und Folien
11. LED-Anwendungen (Sockel, Reflektoren, heat sinks),
12. Als Feedstock für Compounds oder als Blendpartner bzw. Komponente in Blendzusammensetzungen und daraus hergestellten Bauteilen

Die Compounds, Blends, Formkörper, Extrudate, Folien und Folienlaminate aus den erfindungsgemäßen Copolycarbonat-Zusammensetzungen sind ebenfalls Gegenstand dieser Anmeldung, genauso wie Formteile, Extrudate und Folien enthaltend Coextrusionsschichten aus den erfindungsgemäßen Copolycarbonat-Zusammensetzungen.

Die nachfolgenden Beispiele sollen die Erfindung illustrieren, ohne sie jedoch einzuschränken.

### Beispiele

### Verwendete Rohstoffe:

- PC 1: ist ein Polycarbonat auf Basis von Bisphenol A, Phenol als Kettenabbrecher mit einer Schmelze-Volumenfließrate (MVR) von 12,5 cm³/10 min (300°C/1,2 kg) und einem Gesamtgehalt an cyclischen Oligomeren der Formel (I) und linearen Oligomeren der Formeln (II) bis (VI) von 2,58 Gew.-%, wobei der Cyclenanteil 1,39 Gew.-% beträgt; darin ist der Anteil mit Ringröße n=3 0,26 Gew.-% und mit n=4 0,40 Gew.-%.
- **PC 2**: ist ein Polycarbonat auf Basis von Bisphenol A, Phenol als Kettenabbrecher mit einem MVR von 12,5 cm³/10 min (300°C/1,2 kg) ) und einem Gesamtgehalt an cyclischen Oligomeren der Formel (I) und linearen Oligomeren der Formeln (II) bis (VI) von 1,94 Gew.-%, wobei der Cyclenanteil 0,67 Gew.-% beträgt; darin ist der Anteil mit Ringröße n=3 0,25 Gew.-% und mit n=4 0,19 Gew.-%.

PC1 ist somit das Polycarbonat, welches den höheren Anteil an Cyclen und linearen Oligomeren aufweist
- **CoPC**: ist ein kommerziell erhältliches Copolycarbonat auf Basis von Bisphenol A und Bisphenol TMC, Phenol als Kettenabbrecher mit einem MVR von 17 cm³/10 min (330°C/2,16 kg) (Apec 1745 von Bayer MaterialScience AG).

Das Polycarbonat PC2 wurde in einem Schmelzeverfahren wie folgt hergestellt:
Aus einer Vorlage werden 8.600 kg/h Schmelzegemisch, bestehend aus 4.425 kg Diphenylcarbonat/h (20.658 mol/h) und 4.175 kg Bisphenol A/h (18.287 mol/h), unter Zusetzen von 0,52 kg des Phenoladdukts von Tetraphenylphosphoniumphenolat mit 65,5 % Tetraphenylphosphoniumphenolat/h (0,786 mol/h; das sind 0,0043 Mol %) gelöst in 4,5 kg Phenol/h durch einen Wärmetauscher gepumpt, auf 190°C erwärmt und durch eine Verweilkolonne bei 12 bar und 190°C geführt. Die mittlere Verweilzeit beträgt 50 Minuten. Die Schmelze wird dann über ein Entspannungsventil in einen unter 200 mbar stehenden Abscheider geleitet. Die abfließende Schmelze wird in einem, ebenfalls unter 200 mbar stehenden, Fallfilmverdampfer wieder auf 190°C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2. / 3. / 4. Stufe sind 100 / 74 / 40 mbar; 220° / 225° / 273°C und 20 / 10 / 10 Minuten. Das entstandene Oligomere hat eine rel. Viskosität von 1,08. Alle Brüden werden über Druckregelungen in eine unter Vakuum stehende Kolonne geführt und als Kondensate abgeleitet. Danach wird das Oligomer in einem sich anschließenden Scheibeneaktor bei 280°C und 3,0 mbar bei einer Verweilzeit von 45 Minuten zu einem höhermolekularen Produkt aufkondensiert. Die rel. Viskosität beträgt 1,195. Die Brüden werden kondensiert. Vom Schmelzestrom, der in einen weiteren Korbreaktor geleitet wird, wird mittels einer Zahnradpumpe ein Teilstrom von 150 kg Schmelze/h abgezweigt, mit 150 g einer 5 %igen Lösung des Quenchers der Formel 6 in Phenol/h versetzt, über einen statischen Mischer mit einem Länge-zu-Durchmesser-Verhältnis von 20 geführt und wieder in den Hauptschmelzestrom zurückgeleitet. Direkt nach dem Zusammentreffen wird der zugegebene Quencher im gesamten Schmelzestrom mittels eines weiteren statischen Mischers homogen verteilt. Die so behandelte Schmelze wird in einem weiteren Scheibenreaktor bei 290°C, 0,7 mbar und bei einer mittleren Verweilzeit von 120 Minuten weiter den Prozessbedingungen ausgesetzt, ausgetragen und granuliert. Die Brüden werden in der Vakuumanlage und dahinter kondensiert.

Das Polycarbonat PC1 wurde in einem Phasengrenzflächenverfahren wie folgt hergestellt:
In einem Umpumpreaktor wurden vor der Pumpe über ein T-Stück 24.000 kg/h einer alkalischen Bisphenol A-Lösung, die 15 Gew.-% Bisphenol A (BPA) und 2,1 mol Natronlauge pro mol BPA enthält, sowie über ein weiteres T-Stück 1848 kg/h Phosgen gelöst in 20400 kg/h Lösungsmittel, welches aus 50 Gew.-% Methylenchlorid und 50 Gew.-% Monochlorbenzol bestand, eindosiert. Zur Aufrechterhaltung der Alkalität wurden 360 kg/h 32 %ige Natronlauge zudosiert und das Reaktionsgemisch über einen Wärmetauscher und einen ungerührten Verweilzeitbehälter zurück zur Pumpe geleitet, wobei die oben genannten Stoffströme zudosiert wurden. Mittels einer Mengenmessung wurde die umgepumpte Menge zu 260 m³/h bestimmt. Die Temperatur betrug 36°C. Eine Teilmenge der Emulsion, die so groß war wie die zufließenden Rohstoffe, wurde vor den Dosierstellen für BPA und Phosgen aus dem Verweilzeitbehälter einer weiteren Pumpe zugeleitet und durch einen Rohrreaktor gepumpt. Diesem Strom wurden 1050 kg/h Natronlauge (32 Gew.-%) sowie 134 kg/h p-tert.-Butylphenol, gelöst in 536 kg Lösungsmittelgemisch, zudosiert. Nach einer Verweilzeit von 10 Min. wurden 18 kg/h N-Ethylpiperidin in Form einer 4,8 %igen Lösung im Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt. Nach einer Verweilzeit von weiteren 10 Min. wurde die Emulsion in einem Trenngefäß getrennt und die Polycarbonatlösung nach bekannten Verfahren z.B. durch Zentrifugentechnik, elektrolytfrei gewaschen. Die Polycarbonatlösung wurde in Eindampfanlagen einkonzentriert und auf einem Ausdampfextruder von Restlösungsmittel befreit.

Das Copolycarbonat CoPC wurde wie das PC1 in einem Phasengrenzflächenverfahren analog hergestellt. Das BP-TMC zu BPA-Verhältnis wird dabei so gewählt, dass eine Vicat B Temperatur von 170°C erreicht wird.

Die Copolycarbonat-Zusammensetzungen der Beispiele 1-6 auf Basis der Rohstoffe PC1 und PC2 sowie CoPC (Apec 1745) werden auf einem Zweiwellenextruder bei 300 °C in den in Tabelle 1 und 2 aufgeführten Rezepturen vermischt. Die so durch Compoundierung erhalten Polymerzusammensetzungen werden granuliert und stehen für polymerphysikalische Charakterisierungen zur Verfügung.

### Bestimmung des Gehalts an cyclischen und linearen Oligomeren

Die Probe wird mit Methylenchlorid gelöst. Durch Zugabe von Aceton wird der überwiegende Anteil des Polymeren ausgefällt. Die ungelösten Anteile werden abfiltriert, das Filtrat wird zur Trockne eingeengt. Der Trockenrückstand wird mit THF gelöst und die Oligomeren werden mit HPLC mit UV-Detektion bestimmt.

### Charakterisierung der erfindungsgemäßen Formmassen (Testmethoden):

Die Bestimmung der Schmelze-Volumenfließrate (MVR) erfolgt bei 300°C und 1,2 kg Belastung bzw. bei 330°C und 2,16 kg Belastung mit einem Schmelzindexprüfgerät nach ISO 1133.

Die Vicat-Temperatur VST B50 wird nach DIN ISO 306, Methode B bei einer Heizlast von 50 K/h ermittelt.

Der Yellowness Index YI wird nach DIN 6167 ermittelt. Die optische Transmission wird nach DIN 5036 und die Trübung nach DIN 53490 bestimmt.

**Tabelle 1: Copolycarbonat- Zusammensetzungen**

| **Experiment** | | **1** | **2** | **3** | **4** | **5** | **6** |
|---|---|---|---|---|---|---|---|
| **CoPC** | % | 75 | 50 | 25 | 75 | 50 | 25 |
| **PC 1** | % | 25 | 50 | 75 | - | - | - |
| **PC 2** | % | - | - | - | 25 | 50 | 75 |

Die Experimente 1-3 sind erfindungsgemäß und weisen den höheren Anteil an cyclischen und linearen Oligomeren auf. Die Experimente 4 bis 6 stellen Vergleichsbeispiele zu den erfindungsgemäßen Beispielen 1-3 dar.

**Tabelle 2: Rheologische und thermische Eigenschaften der Copolycarbonat-Zusammensetzungen**

| **Experiment** | **1** | **2** | **3** | **4** | **5** | **6** |
|---|---|---|---|---|---|---|
| MVR / 330°C / 2,16 kg / 7 min. | 20,6 | 26,2 | 34,0 | 21,2 | 29,4 | 41,1 |
| Vicat VSTB120 [°C] | 162,6 | 157,7 | 152,6 | 163,0 | 157,0 | 151,4 |
| Vicat VSTB50 [°C] | 161,5 | 156,7 | 151,5 | 161,5 | 155,2 | 150,0 |

Die Werte in Tabelle 2 zeigen, dass die guten thermischen Eigenschaften (Vicat Temperaturen) erhalten bleiben, obwohl der Anteil an cyclischen und linearen Oligomeren größer ist.

**Tabelle 3: Eigenschaften nach Thermolagerung bei 140°C**

| **Thermolagerung bei 140°C** | | **1** | **2** | **3** | **4** | **5** | **6** |
|---|---|---|---|---|---|---|---|
| **500h** | | | | | | | |
| Transmission | % | 85,73 | 86,56 | 87,46 | 85,58 | 85,98 | 85,67 |
| Trübung | % | 0,5 | 0,39 | 0,43 | 0,4 | 0,31 | 0,41 |
| Y.I. | | 6,1 | 6,39 | 6,88 | 7,18 | 9,59 | 12,74 |

| **1000h** | | | | | | | |
|---|---|---|---|---|---|---|---|
| Transmission | % | 84,56 | 85,22 | 85,73 | 84,11 | 83,15 | 80,75 |
| Trübung | % | 0,54 | 0,42 | 0,42 | 0,34 | 0,32 | 0,35 |
| Y.I. | | 11,96 | 12,35 | 14,2 | 14,25 | 20,72 | 29,74 |

| **1500h** | | | | | | | |
|---|---|---|---|---|---|---|---|
| Transmission | % | 83,25 | 83,51 | 83,2 | 82,29 | 79,55 | 76,47 |
| Trübung | % | 0,7 | 0,51 | 0,44 | 0,43 | 0,32 | 0,38 |
| Y.I. | | 17,8 | 19,69 | 22,94 | 21,89 | 33,81 | 43,84 |

Die Werte in Tabelle 3 zeigen, dass die erfindungsgemäßen Copolycarbonat-Zusammensetzungen 1 bis 3 nach Thermolagerung bei 140°C (für 500 h, 1000 h bzw. 1500 h) deutlich geringere Vergilbungen - wiedergegeben durch die Yellowness Indizes YI - als die Vergleichsbeispiele 4 bis 6 aufweisen.

Der höhere Anteil an Cyclen und linearen Oligomeren führt somit zu einem geringeren Grad der Vergilbung. Dies ist überraschend, da im Spritzgussprozess zur Herstellung der Prüfkörper auf Grund der schlechteren Fließfähigkeit intern ein höherer thermischer Stress erzeugt wird, was zu einer thermischen Schädigung (Vergilbung) führen sollte, die sich in einem höheren Yellowness Index nach Thermolagerung widerspiegeln sollte. Außerdem weisen oligomere Bestandteile eine geringere thermische Beständigkeit auf, was sich ebenfalls negativ auf die Vergilbung bei Thermolagerung auswirken sollte.

## Patentansprüche

1. Copolycarbonat-Zusammensetzung umfassend:
A) 5 bis 99 Gew.-% eines Copolycarbonats enthaltend eine oder mehrere Monomereinheiten der Formel (1) 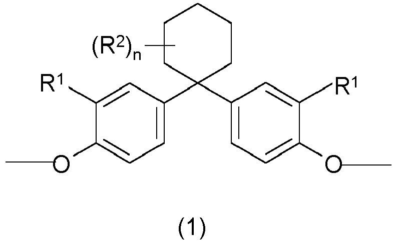 in der
R¹ für Wasserstoff oder C₁-C₄-Alkyl steht,
R² für C₁-C₄-Alkyl steht, und
n für 0, 1, 2 oder 3 steht,
B) 95 bis 1 Gew.-% eines (Co)polycarbonats enthaltend eine oder mehrere Monomereinheiten der allgemeinen Formel (2): 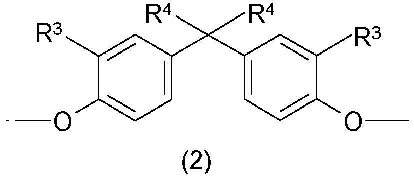 in der
R³ für H, lineares oder verzweigtes C₁-C₁₀ Alkyl steht, und
R⁴ für lineares oder verzweigtes C₁-C₁₀ Alkyl steht,
und wobei Komponente B) keine Monomereinheiten der Formel (1) aufweist;
**dadurch gekennzeichnet, dass** die Komponente B wenigstens ein cyclisches Oligomer der allgemeinen Formel (I) in einer Gesamtmenge von 1,05 bis 1,60 Gew.-% bezogen auf das Gewicht der Komponente B enthält, 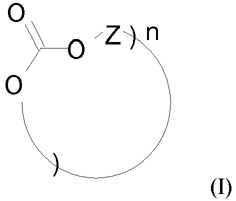 wobei
n eine ganze Zahl von 2 bis 6 ist, und
Z für einen Rest der Formel (Ia) 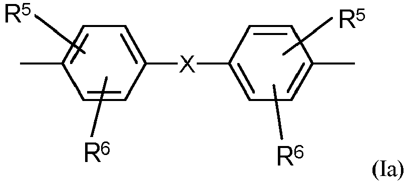 steht,
in der
R⁵ und R⁶ unabhängig voneinander für H oder C₁-C₈-Alkyl stehen, und
X für eine Einfachbindung, C₁- bis C₆-Alkylen, C₂- bis C₅-Alkyliden oder C₅- bis C₆- Cycloalkyliden, welches mit C₁- bis C₆-Alkyl substituiert sein kann, steht,
und die Komponente B ein oder mehrere linearen Oligomere der allgemeinen Formeln (II), (III), (IV), (V) und/oder (VI) in einer Gesamtmenge von 0,50 Gew.-% bis 1,40 Gew.-%, bezogen auf das Gewicht der Komponente B, enthält, 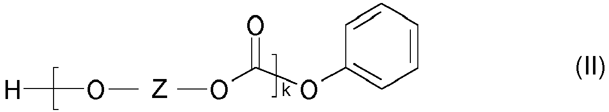 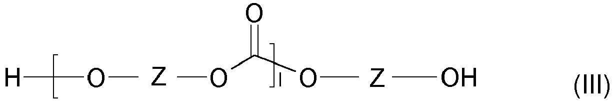 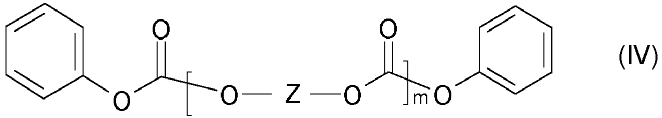 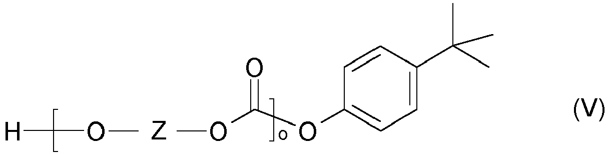 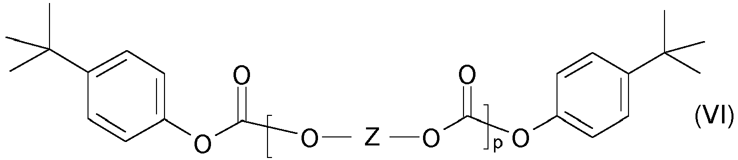 wobei
k, l, m, o und p jeweils unabhängig voneinander für eine ganze Zahl zwischen 1 und 6 stehen können und Z für den bereits definierten Rest der Formel (Ia) steht,
wobei die Mengen der Strukturen (I) und (II) bis (VI) durch Lösen der Komponente B) in Methylenchlorid, Fällung mit Aceton, Einengung des Filtrats zur Trockne, Lösen des Trockenrückstands in Tetrahydrofuran und anschließende quantitative HPLC mit UV-Detektion bestimmt werden.

2. Copolycarbonat-Zusammensetzung gemäß Anspruch 1, **dadurch gekennzeichnet, dass** die ein oder mehreren linearen Oligomere der Formeln (II) bis (VI) in der Komponente B in einer Menge von 0,60 Gew.-% bis 1,35 Gew.-% enthalten sind.

3. Copolycarbonat-Zusammensetzung gemäß einem der Ansprüche 1 oder 2, **dadurch gekennzeichnet, dass** die Gesamtmenge der cyclischen Oligomere der allgemeinen Formel (I) und der linearen Oligomeren der allgemeinen Formeln (II), (III), (IV), (V) und (VI) in der Komponente B in Summe mindestens 2,0 Gew.-% beträgt.

4. Copolycarbonat-Zusammensetzung gemäß einem der Ansprüche 1 bis 3, **dadurch gekennzeichnet, dass** das cyclische Oligomere der Formel (I) mit n = 4 am häufigsten vertreten ist, bezogen auf die Gesamtmenge der cyclischen Oligomere der Formel (I) in der Komponente B.

5. Copolycarbonat-Zusammensetzung gemäß einem der Ansprüche 1 bis 4, **dadurch gekennzeichnet, dass** X für eine Einfachbindung oder für Isopropyliden steht und R⁵ und R⁶ unabhängig voneinander für H oder C₁ - C₄-Alkyl stehen.

6. Copolycarbonat-Zusammensetzung gemäß einem der Ansprüche 1 bis 5, **dadurch gekennzeichnet, dass** der Anteil der Monomereinheiten der Formel (1) im Copolycarbonat 0,1 - 88 mol-% (bezogen auf die Summe der darin enthaltenen Diphenol-Monomereinheiten) beträgt.

7. Copolycarbonat-Zusammensetzung gemäß einem der Ansprüche 1 bis 6, **dadurch gekennzeichnet, dass** wenigstens eine der Komponenten A oder B zusätzlich Monomereinheiten der Formel (4) enthält 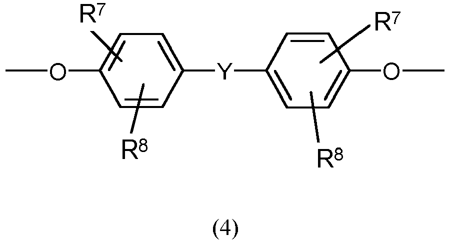 in welcher
R⁷ und R⁸ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

8. Copolycarbonat-Zusammensetzung gemäß einem der Ansprüche 1 bis 7, **dadurch gekennzeichnet, dass** die Komponente A und/oder die Komponente B als Endgruppe eine Struktureinheit der Formel (3a) und/oder (3b) enthält.

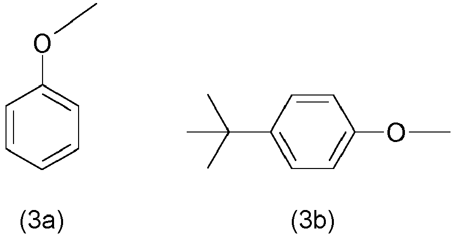

9. Copolycarbonat-Zusammensetzung gemäß einem der Ansprüche 1 bis 8, **dadurch gekennzeichnet, dass** R¹ für Wasserstoff und R² für Methyl steht und n gleich 3 ist.

10. Copolycarbonat-Zusammensetzung gemäß einem der Ansprüche 1 bis 9, **dadurch gekennzeichnet, dass** die Komponente A Monomereinheiten abgeleitet von Verbindungen der allgemeinen Formeln (1b) und (4c) enthält, 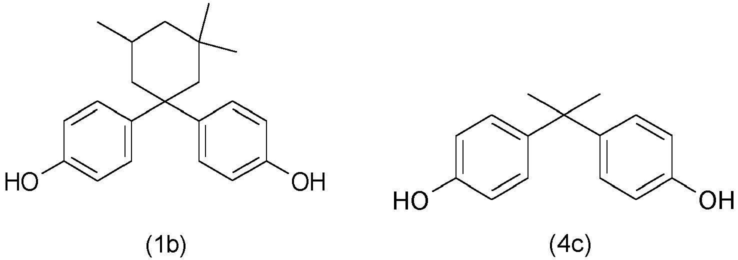 und in den Monomereinheiten der allgemeinen Formel (2) der Komponente B R³ für H und R⁴ für lineares oder verzweigtes C₁-C₆ Alkyl steht.

11. Copolycarbonat-Zusammensetzung gemäß einem der Ansprüche 1 bis 10, **dadurch gekennzeichnet, dass** 0 bis 5 Gew.-% organische Zusatzstoffe in der Zusammensetzung enthalten sind.

12. Copolycarbonat-Zusammensetzung gemäß einem der Ansprüche 1 bis 11, **dadurch gekennzeichnet, dass** wenigstens ein Zusatzstoff aus der Gruppe bestehend aus den Klassen der Thermostabilisatoren, Entformungsmittel und UV-Absorber enthalten ist.

13. Verwendung von Copolycarbonat-Zusammensetzungen gemäß einem der Ansprüche 1 bis 12 zur Herstellung von Blends und/oder Formteilen wie Bezels, Reflektoren, Blinker, Linsen, Bildschirm/Display-Abdeckungen und LED-Anwendungen; Extrudaten, Folien, Folienlaminaten oder Coextrusionsschichten.

14. Formteile, Extrudate, Folien und Folienlaminate, erhältlich aus Copolycarbonat-Zusammensetzungen gemäß einem der Ansprüche 1 bis 12 sowie Formteile, Extrudate und Folien enthaltend Coextrusionsschichten erhältlich aus Copolycarbonat-Zusammensetzungen gemäß einem der Ansprüche 1 bis 12.

## Claims

1. Copolycarbonate composition comprising:
A) 5% to 99% by weight of a copolycarbonate containing one or more monomer units of the formula (1) 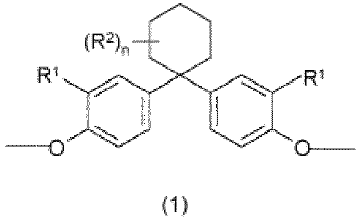 in which
R¹ is hydrogen or C₁-C₄-alkyl,
R² is C₁-C₄-alkyl, and
n is 0, 1, 2 or 3,
B) 95% to 1% by weight of a (co)polycarbonate containing one or more monomer units of the general formula (2): 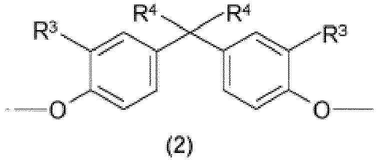 in which
R³ is H, linear or branched C₁-C₁₀ alkyl, and
R⁴ is linear or branched C₁-C₁₀ alkyl,
and where component B) does not have any monomer units of the formula (1);
**characterized in that** component B contains at least one cyclic oligomer of the general formula (I) in a total amount of 1.05% to 1.60% by weight, based on the weight of component B 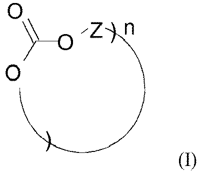 where
n is an integer from 2 to 6, and
Z is a radical of the formula (Ia) 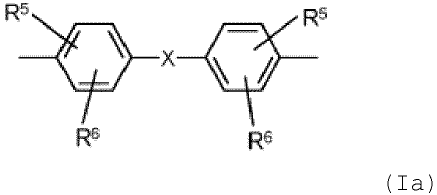 in which
R⁵ and R⁶ are independently H or C₁-C₈-alkyl, and
X is a single bond, C₁- to C₆-alkylene, C₂-to C₅-alkylidene or C₅- to C₆-cycloalkylidene, which may be substituted by C₁- to C₆-alkyl,
and component B contains one or more linear oligomers of the general formulae (II), (III), (IV), (V) and/or (VI) in a total amount of 0.50% by weight to 1.40% by weight, based on the weight of component B, 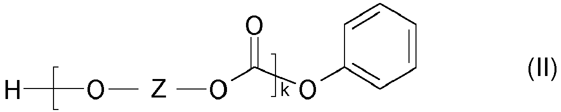 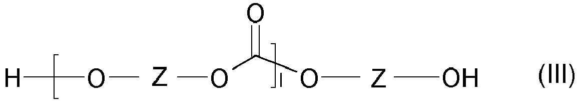 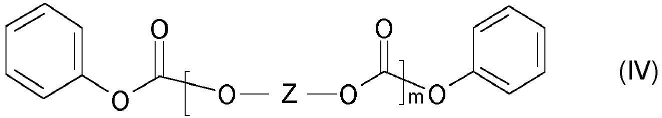 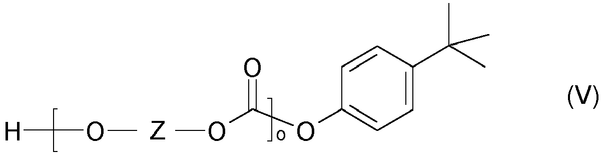 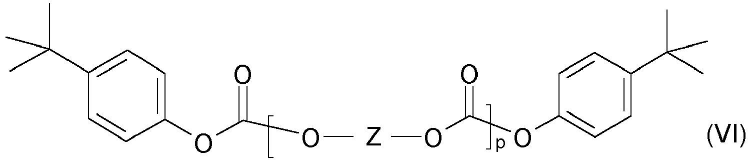 where
k, l, m, o and p may each be independently an integer from 1 to 6 and Z is the radical of the formula (Ia) already defined,
wherein the amounts of the structures (I) and (II) to (VI) are determined by dissolving component B) in methylene chloride, precipitating with acetone, concentrating the filtrate to dryness, dissolving the dry residue in tetrahydrofuran, and then quantitative HPLC with UV detection.

2. Copolycarbonate composition according to Claim 1, **characterized in that** the one or more linear oligomers of the formulae (II) to (VI) are present in component B in an amount of 0.60% by weight to 1.35% by weight.

3. Copolycarbonate composition according to either of Claims 1 or 2, **characterized in that** the total amount of the cyclic oligomers of the general formula (I) and the linear oligomers of the general formulae (II), (III), (IV), (V) and (VI) in component B adds up to at least 2.0% by weight.

4. Copolycarbonate composition according to any of Claims 1 to 3, **characterized in that** the cyclic oligomer of the formula (I) with n = 4 is the most common, based on the total amount of the cyclic oligomers of the formula (I) in component B.

5. Copolycarbonate composition according to any of Claims 1 to 4, **characterized in that** X is a single bond or isopropylidene and R⁵ and R⁶ are independently H or C₁-C₄-alkyl.

6. Copolycarbonate composition according to any of Claims 1 to 5, **characterized in that** the proportion of the monomer units of the formula (1) in the copolycarbonate is 0.1-88 mol% (based on the sum total of the diphenol monomer units present therein) .

7. Copolycarbonate composition according to any of Claims 1 to 6, **characterized in that** at least one of components A or B additionally contains monomer units of the formula (4) 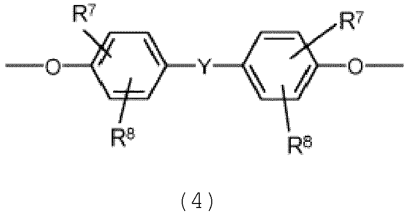 in which
R⁷ and R⁸ are independently H, C₁-C₁₈-alkyl, C₁-C₁₈-alkoxy, halogen such as Cl or Br or respectively optionally substituted aryl or aralkyl, and
Y is a single bond, -SO₂-, -CO-, -O-, -S-, C₁-C₆-alkylene or C₂-C₅-alkylidene, further C₆-C₁₂-arylene which may optionally be fused to further aromatic rings containing heteroatoms.

8. Copolycarbonate composition according to any of Claims 1 to 7, **characterized in that** component A and/or component B contains, as end group, a structural unit of the formula (3a) and/or (3b)

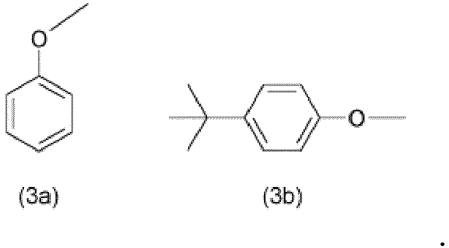

9. Copolycarbonate composition according to any of Claims 1 to 8, **characterized in that** R¹ is hydrogen and R² is methyl and n is 3.

10. Copolycarbonate composition according to any of Claims 1 to 9, **characterized in that** component A contains monomer units derived from compounds of the general formulae (1b) and (4c) 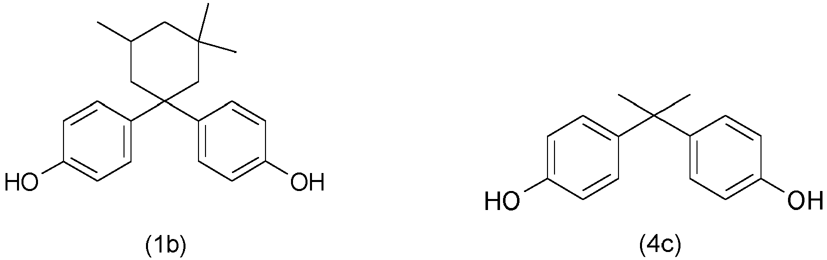 and, in the monomer units of the general formula (2) of component B, R³ is H and R⁴ is linear or branched C₁-C₆ alkyl.

11. Copolycarbonate composition according to any of Claims 1 to 10, **characterized in that** 0% to 5% by weight of organic additives is present in the composition.

12. Copolycarbonate composition according to any of Claims 1 to 11, **characterized in that** at least one additive from the group consisting of the classes of the thermal stabilizers, demoulding agents and UV absorbers is present.

13. Use of copolycarbonate compositions according to any of Claims 1 to 12 for production of blends and/or mouldings such as bezels, reflectors, indicators, lenses, screen/display covers and LED applications; extrudates, films, film laminates or coextrusion layers.

14. Moulding, extrudate, film and film laminate obtainable from copolycarbonate compositions according to any of Claims 1 to 12, and also moulding, extrudate and film comprising coextrusion layers obtainable from copolycarbonate compositions according to any of Claims 1 to 12.

## Revendications

1. Composition de copolycarbonates comprenant :
A) 5 à 99 % en poids d'un copolycarbonate contenant un ou plusieurs motifs monomères de formule (1) 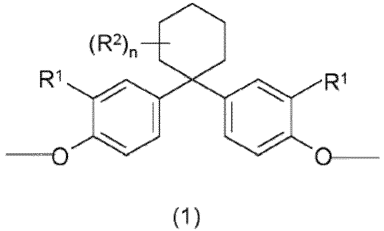 dans laquelle
R¹ représente un hydrogène ou un alkyle en C₁-C₄,
R² représente un alkyle en C₁-C₄, et
n représente 0, 1, 2 ou 3,
B) 95 à 1 % en poids d'un (co)polycarbonate contenant un ou plusieurs motifs monomères de formule générale (2) : 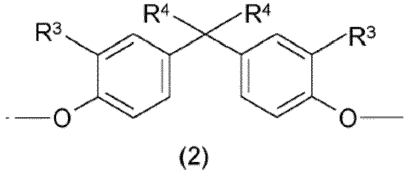 dans laquelle
R³ représente H, un alkyle en C₁-C₁₀ linéaire ou ramifié, et
R⁴ représente un alkyle en C₁-C₁₀, linéaire ou ramifié,
et le composant B) ne comportant aucun motif monomère de formule (1) ;
**caractérisée en ce que** le composant B contient au moins un oligomère cyclique de formule générale (1) en une quantité totale de 1,05 à 1,60 % en poids par rapport au poids du composant B, 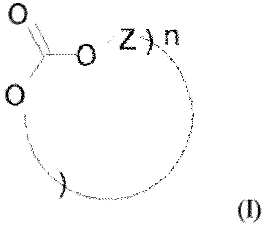 dans laquelle
n représente un nombre entier de 2 à 6, et
Z représente un radical de formule (Ia) 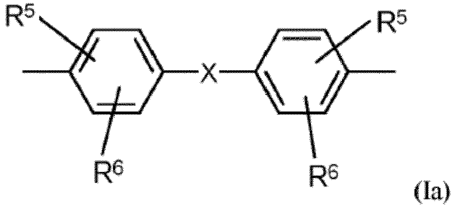 dans laquelle
R⁵ et R⁶ représentent indépendamment l'un de l'autre H ou un alkyle en C₁-C₈, et
X représente une liaison simple, un alkylène en C₁ à C₆, un alkylidène en C₂ à C₅ ou un cycloalkylidène en C₅ à C₆, qui peut être substitué par un alkyle en C₁ à C₆,
et le composant B contient un ou plusieurs oligomères linéaires de formules générales (II), (III), (IV), (V) et/ou (VI) en une quantité totale de 0,50 % en poids à 1,40 % en poids par rapport au poids du composant B, 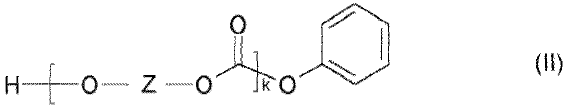 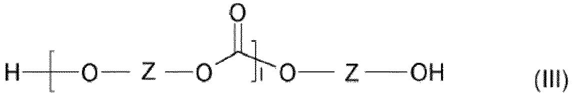 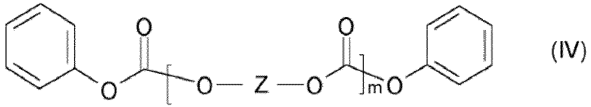 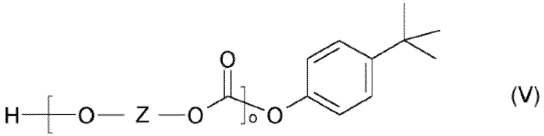 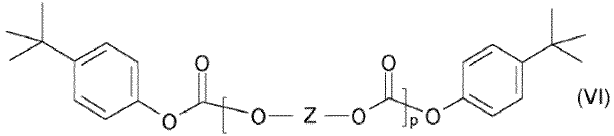 dans lesquelles
k, l, m, o et p peuvent chacun indépendamment des autres représenter un nombre entier entre 1 et 6, et Z représente le radical de formule (Ia) déjà défini,
les quantités des structures (1) et (II) à (VI) étant déterminées par dissolution du composant B) dans du chlorure de méthylène, précipitation à l'acétone, concentration du filtrat jusqu'à siccité, dissolution du résidu de séchage dans du tétrahydrofurane, puis CLHP quantitative avec détection UV.

2. Composition de copolycarbonates selon la revendication 1, **caractérisée en ce que** le ou les oligomères linéaires de formules (II) à (VI) sont contenus dans le composant B en une quantité de 0, 60 % en poids à 1,35 % en poids.

3. Composition de copolycarbonates selon l'une des revendications 1 ou 2, **caractérisée en ce que** la quantité totale des oligomères cycliques de formule générale (I) et des oligomères linéaires de formules générales (II), (III), (IV), (V) et (VI) dans le composant B est au total d'au moins 2,0 % en poids.

4. Composition de copolycarbonates selon l'une des revendications 1 à 3, **caractérisée en ce que** l'oligomère cyclique de formule (1) avec n = 4 est celui qui est représenté le plus fréquemment, par rapport à la quantité totale des oligomères cycliques de formule (I) dans le composant B.

5. Composition de copolycarbonates selon l'une des revendications 1 à 4, **caractérisée en ce que** X représente une liaison simple ou un isopropylidène et R⁵ et R⁶ représentent indépendamment l'un de l'autre H ou un alkyle en C₁-C₄.

6. Composition de copolycarbonates selon l'une des revendications 1 à 5, **caractérisée en ce que** la proportion des motifs monomères de formule (I) dans le copolycarbonate est de 0,1 à 88 % en moles (par rapport à la somme des motifs monomères diphénol qui y sont contenus).

7. Composition de copolycarbonates selon l'une des revendications 1 à 6, **caractérisée en ce qu'**au moins l'un des composants A ou B contient en outre des motifs monomères de formule (4) 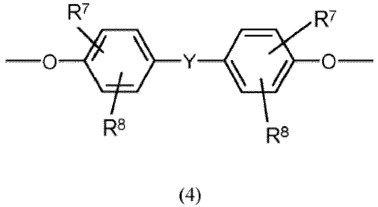 dans laquelle
R⁷ et R⁸ représentent indépendamment l'un de l'autre H, un alkyle en C₁-C₁₈, un alcoxy en C₁-C₁₈, un halogène tel que Cl ou Br ou un aryle ou un aralkyle, chacun éventuellement substitué, et
Y représente une liaison simple, -SO₂-, -CO-, -O-, -S-, un alkylène en C₁-C₆ ou un alkylidène en C₂-C₅, en outre un arylène en C₆-C₁₂, qui peut éventuellement être condensé avec d'autres cycles aromatiques contenant des hétéroatomes.

8. Composition de copolycarbonates selon l'une des revendications 1 à 7, **caractérisée en ce que** le composant A et/ou le composant B contiennent en tant que groupe terminal un motif structural de formule (3a) et/ou (3b).

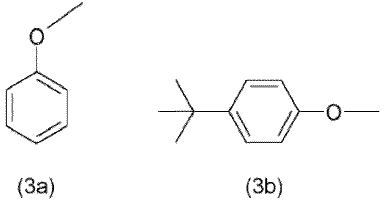

9. Composition de copolycarbonates selon l'une des revendications 1 à 8, **caractérisée en ce que** R¹ représente un hydrogène et R² un méthyle, et n est égal à 3.

10. Composition de copolycarbonates selon l'une des revendications 1 à 9, **caractérisée en ce que** le composant A contient des motifs monomères qui dérivent de composés de formules générales (1b) et (4c). 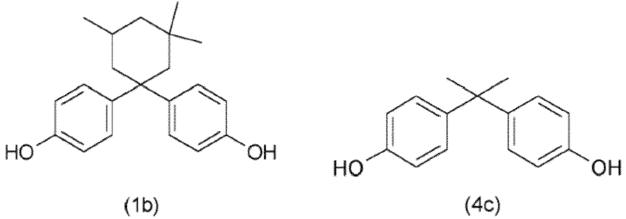 et, dans les motifs monomères de formule générale (2) du composant B, R³ représente H et R⁴ un alkyle en C₁-C₆ linéaire ou ramifié.

11. Composition de copolycarbonates selon l'une des revendications 1 à 10, **caractérisée en ce que** la composition contient 0 à 5 % en poids d'additifs organiques.

12. Composition de copolycarbonates selon l'une des revendications 1 à 11, **caractérisée en ce qu'**elle contient au moins un additif du groupe consistant en les classes des thermostabilisants, des agents de démoulage et des absorbants UV.

13. Utilisation des compositions de copolycarbonates selon l'une des revendications 1 à 12 pour fabriquer des mélanges et/ou des objets moulés tels que des bézels, des réflecteurs, des clignotants, des lentilles, des panneaux de protection pour écrans/affichage et des applications LED ; des extrudats, des feuilles, des stratifiés en feuilles et des couches coextrudées.

14. Objets moulés, extrudats, feuilles et stratifiés de feuilles pouvant être obtenus à partir de compositions de copolycarbonates selon l'une des revendications 1 à 12, ainsi qu'objets moulés, extrudats et feuilles contenant des couches coextrudées pouvant être obtenus à partir de compositions de copolycarbonates selon l'une des revendications 1 à 12.
